Europäisches Patentamt

European Patent Office

Office européen des brevets

(19)

(11) Numéro de publication : **0 036 363**
**B1**

(12) **FASCICULE DE BREVET EUROPÉEN**

(45) Date de publication du fascicule du brevet :
23.05.84

(51) Int. Cl.³ : **B 29 D   7/22, H 01 T  19/04**

(21) Numéro de dépôt : **81400376.0**

(22) Date de dépôt : **11.03.81**

(54) **Procédé et dispositif de traitement de bandes de matériau polymère par décharge électrique.**

(30) Priorité : **11.03.80 FR 8005441**

(43) Date de publication de la demande :
**23.09.81 Bulletin 81/38**

(45) Mention de la délivrance du brevet :
**23.05.84 Bulletin 84/21**

(84) Etats contractants désignés :
**CH DE GB IT LI**

(56) Documents cités :
**DE-B- 1 019 017**
**FR-A- 1 330 393**
**FR-A- 2 008 405**
**FR-A- 2 149 424**
**US-A- 3 376 208**

(73) Titulaire : **ELECTRICITE DE FRANCE Service National**
**2, rue Louis Murat**
**F-75008 Paris (FR)**

(72) Inventeur : **Goldman, Alice**
**E.S.E. Plateau du Moulon**
**F-91190 Gif Sur Yvette (FR)**
Inventeur : **Le Fur, Daniel**
**E.S.E. Plateau du Moulon**
**F-91190 Gif Sur Yvette (FR)**

(74) Mandataire : **Fort, Jacques et al**
**CABINET PLASSERAUD 84, rue d'Amsterdam**
**F-75009 Paris (FR)**

EP 0 036 363 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention a pour objet un procédé et un dispositif de traitement de bandes de matériau polymère par décharge électrique, destinés notamment à permettre une meilleure adhérence de divers produits sur la surface de la bande.

On sait que les polymères en bandes ont un grand intérêt industriel. Les bandes constituées par un film continu sont notamment utilisées pour l'emballage de produits alimentaires, la constitution de pellicules photographiques et de supports d'imprimerie. Les bandes de matériau polymère à l'état poreux ou de tissu comportent également des applications nombreuses.

Pour être utilisables, les bandes doivent se prêter à l'encrage, à l'enduction ou au complexage. Pour que ces traitements puissent être effectués dans de bonnes conditions, il est nécessaire de soumettre les bandes de matériau polymère à un traitement préliminaire améliorant leur adhésivité de surface. On a notamment utilisé dans ce but l'action de solutions oxydantes, le traitement à la flamme et par décharge électrique. Le document FR-A-2 149 424 décrit notamment un dispositif dans lequel une tension alternative est créée entre un tambour conducteur portant la bande à traiter, d'une part, une ou plusieurs électrodes tubulaires placées à l'opposé du tambour par rapport à la bande, d'autre part. La tension alternative est appliquée entre cette (ces) électrode(s) et la masse, c'est-à-dire le tambour. On fait passer la bande entre les électrodes de création de décharge (quatrième paragraphe de la colonne de gauche de la page 2), c'est-à-dire entre chaque électrode tubulaire et le tambour là où on provoque la décharge dans une atmosphère appropriée créée à l'aide d'une fente étroite (troisième paragraphe de la colonne de droite de la page 3).

La présente invention vise notamment à fournir un procédé de traitement électrique répondant mieux que ceux antérieurement connus aux exigences de la pratique, notamment en ce que, tout à la fois, il est facile à mettre en œuvre, n'exige pas l'emploi d'énergies et de tensions prohibitivement élevées et se prête à des vitesses de traitement élevées.

Dans ce but, l'invention propose notamment un procédé suivant lequel on fait défiler la bande successivement en un premier emplacement où l'on dépose des charges électriques par décharge couronne sur une face de la bande, puis en un second emplacement où on soumet la bande à une décharge électrique en courant alternatif, caractérisé en ce qu'on crée au second emplacement un arc glissant le long de ladite face de la bande, dirigé transversalement au sens de défilement de la bande pour la couvrir sur toute sa largeur, entre des électrodes situées en regard de ladite face et soumises à une haute tension alternative. Les électrodes sont avantageusement placées et construites de façon que la décharge couronne soit transversale et ne mette en jeu qu'un seul canal de décharge. Un tel traitement par canal étroit permet d'obtenir des résultats équivalents à ceux obtenus avec les dispositifs antérieurs en mettant en jeu des énergies et des tensions bien moindres. A titre d'exemple, il suffit de noter que l'on peut propager une décharge rampant suivant un canal unique le long d'un fil électrique avec une tension de l'ordre de 75 kV. Les charges sont déposées sur la bande par décharge couronne entre un support conducteur portant la bande et une électrode filaire parallèle au support et portée à une tension négative par rapport à celui-ci. Il faut remarquer au passage que, si l'on a déjà utilisé le dépôt de charges sur une bande avant traitement ultérieur (FR-A-1 330 393), le traitement ultérieur était très différent puisqu'il s'agissait d'une décharge haute fréquence utilisée entre les faces du matériau à traiter et le but recherché par la décharge couronne était totalement différent puisqu'il s'agissait de faire adhérer fermement la pellicule traitée à la surface conductrice en mouvement qui l'entraînait.

L'invention propose également un dispositif de traitement de bandes de matériau polymère par décharge électrique, comprenant un support destiné à recevoir une face de la bande en circulation, une électrode filaire parallèle au support, de courbure très supérieure à celle du support et des moyens pour établir, entre support et électrode, une différence de potentiel continue de création d'un courant par effet couronne déposant des charges sur l'autre face de la bande, dispositif caractérisé en ce qu'il comporte de plus des électrodes situées en regard de ladite autre face, à un emplacement de passage de la bande en aval de l'électrode filaire et des moyens pour établir entre lesdites électrodes une tension alternative de création d'un arc glissant le long de la surface de la bande qui a reçu les charges.

Lorsque la bande est de grande largeur, il est évidemment possible de prévoir des électrodes dont le nombre dépasse deux, réparties en travers de la bande et associées deux à deux à un générateur de tension alternative.

L'invention sera mieux comprise à la lecture de la description qui suit d'un dispositif qui en constitue un mode particulier de réalisation, donné à titre d'exemple non limitatif.

La description se réfère au dessin qui l'accompagne, dans lequel :

la figure 1 est un schéma de principe du dispositif, représenté en élévation ;

la figure 2 est un schéma montrant le dispositif vu depuis la gauche de la figure 1 ;

la figure 3 montre l'allure de la variation de la tension V d'amorçage d'arc en fonction de la distance D entre les électrodes, dans le cas où la bande n'a pas reçu de charges (courbe A) et dans celui où elle a reçu des charges par effet couronne (courbe B).

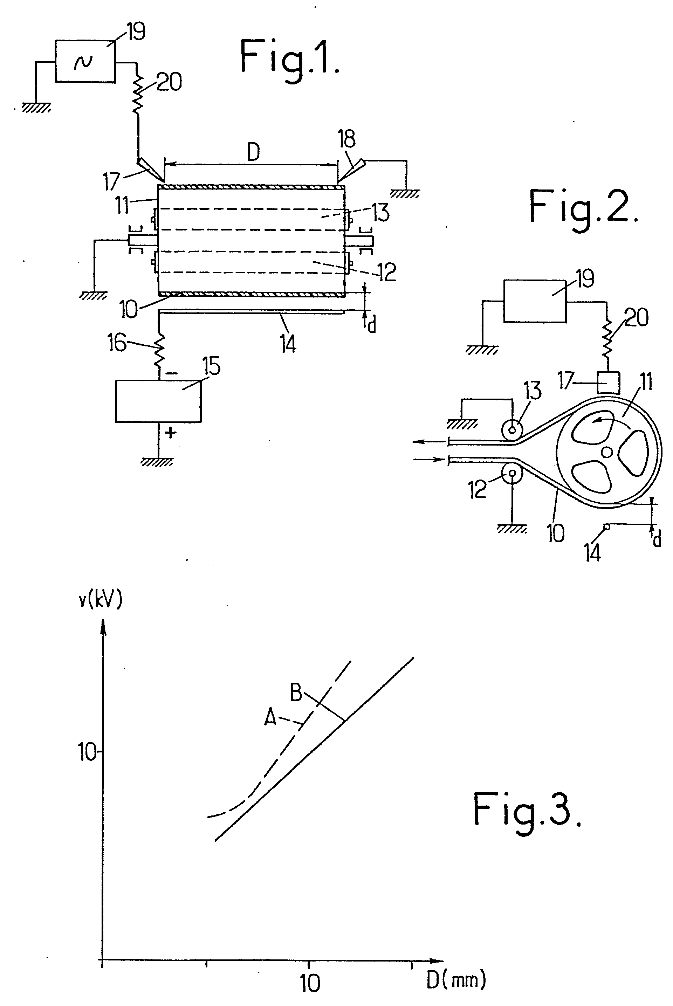

Le dispositif schématisé en figures 1 et 2 est destiné à traiter une bande 10 de matériau polymère, que l'on supposera être par exemple une pellicule de polyester de quelques dizaines de microns d'épaisseur.

Le dispositif comprend un support 11 constitué par un tambour rotatif en matériau conducteur de l'électricité, relié à la masse. Ce tambour guide la bande et, de plus, la fait circuler suivant un trajet déterminé. Deux galets 12 et 13 maintiennent la bande 10 appliquée sur le tambour 11.

Au cours de son déplacement, la bande 10 passe en un premier emplacement, sous une électrode filaire 14 parallèle à l'axe du tambour et portée par un générateur de tension 15 à un potentiel négatif par rapport au tambour, potentiel suffisant pour créer une décharge couronne. La tension $V_0$ qui est appliquée à l'électrode filaire 14 sera choisie en fonction de la distance d entre électrode filaire 14 et tambour. Plus d est faible pour une même tension $V_0$, plus on déposera une quantité de charges importante. Une résistance 16 est insérée dans le circuit du générateur 15 pour éviter l'amorçage d'un arc.

En général, l'électrode filaire 14 aura un diamètre de quelques dizaines de microns, le générateur 15 fournira une haute tension de quelques kV et la résistance aura une valeur de l'ordre de 10 MOhms. A titre d'exemple, on peut indiquer que des résultats satisfaisants ont été obtenus avec une tension $V_0$ de 9 kV, une distance d de 3 mm, et une électrode de 25 microns, lorsque la bande de polyester a une épaisseur de 36 microns.

Un courant de quelques microampères par centimètre de longueur d'électrode circule alors de l'électrode filaire 14 vers le support 11.

La bande 10 portée par le tambour 11 passe ensuite en un second emplacement où elle est soumise à une décharge électrique alternative glissante. En ce second emplacement sont disposées deux électrodes couteaux 17 et 18 se terminant à proximité immédiate de la bande 10. Un générateur 19 établit entre les électrodes 17 et 18 une tension de création d'arc. Le générateur 19 est alternatif, de façon à ne pas apporter des charges sur le film. Une impédance 20 est interposée dans le circuit du générateur 19 pour limiter le courant. La fréquence du générateur est avantageusement élevée, de l'ordre du kHerz ou davantage, ce qui permet de constituer l'impédance 20 par une inductance. On peut toutefois également travailler à la fréquence du réseau et utiliser une résistance comme impédance 20.

Pour une valeur suffisante de la tension, une décharge peut prendre naissance et s'établir entre les électrodes 17 et 18. Cette décharge rampe le long de la surface de la bande 10 et est guidée par la présence de la surface conductrice du tambour 11 sous la bande.

Grâce au dépôt préalable de charges sur la bande par la décharge couronne auxiliaire, la tension V à fournir par le générateur 19 est nettement abaissée, comme le montre la figure 3. La courbe A donne la tension V à appliquer en l'absence de dépôt de charges. La courbe B correspond au dépôt préalable de charges sous une tension de 9 kV à l'aide d'une électrode filaire 14 de 25 microns de diamètre placée à 3 mm du tambour. En diminuant la distance d, on peut augmenter encore les charges déposées et diminuer corrélativement la tension d'amorçage V.

Les essais ont montré que l'on obtient une amélioration satisfaisante des propriétés de surface d'une pellicule de polyester avec une vitesse de défilement de la bande de 80 cm par minute, alors qu'un traitement fournissant le même résultat par décharge couronne nécessiterait une vitesse de l'ordre de 2 cm par minute.

La figure 3 montre que la tension d'amorçage V augmente avec la distance D entre les électrodes 17 et 18. Lorsque la largeur de la bande traitée est élevée, on peut subdiviser l'intervalle total de décharge en un nombre quelconque n d'intervalles en série, en utilisant n + 1 électrodes. Ces intervalles seront alimentés en parallèle par des générateurs distincts.

L'invention permet de traiter non seulement des pellicules continues, mais aussi des pellicules poreuses ou même des bandes tissées. La décharge rampe alors le long de la bande en même temps qu'elle la pénètre. Dans tous les cas, on évite de brûler la bande grâce à la limitation de courant fournie par l'impédance d'étouffement 20.

L'invention est évidemment susceptible d'être mise en œuvre à l'aide d'un matériel différent de celui qui a été décrit à titre d'exemple.

## Revendications

1. Procédé de traitement de bande de matériau polymère par décharge électrique, suivant lequel on fait défiler la bande successivement en un premier emplacement où on dépose des charges électriques par décharge couronne sur une face de la bande, puis en un second emplacement où on soumet ladite bande à une décharge électrique en courant alternatif, caractérisé en ce qu'on crée au second emplacement par la décharge électrique, un arc glissant le long de ladite face de la bande, dirigé transversalement au sens de défilement de la bande pour la couvrir sur toute sa largeur entre des électrodes (17, 18) situées du même côté de la bande et entre lesquelles est appliquée une haute tension alternative.

2. Procédé suivant la revendication 1, caractérisé en ce qu'on dépose les charges par décharge couronne entre un support conducteur portant la bande et une électrode (14) filaire parallèle au support et portée à une tension négative par rapport au support (11).

3. Dispositif de traitement de bande de matériau polymère (10) par décharge électrique, comprenant un support (11) destiné à recevoir une face de la bande en circulation, une électrode filaire (14) parallèle au support, de courbure très supérieure à celle du support et des moyens (15) pour établir, entre support et électrode, une différence de potentiel continue de création d'un courant par décharge couronne déposant des charges sur l'autre face de la bande (10), et des électrodes situées du côté de la bande, opposé au support, à un emplacement de passage de la bande en aval de l'électrode filaire, caractérisé en ce que les électrodes sont espacées transversalement au sens de circulation de la bande et soumises à une différence de tension alternative de création d'un arc glissant le long de la surface de la bande qui a reçu les charges, sur toute la largeur de la bande.

4. Dispositif suivant la revendication 3, caractérisé en ce que n + 1 électrodes sont réparties transversalement à la bande pour définir n intervalles de création d'arc, les électrodes étant associées deux à deux à un générateur de tension alternative.

5. Dispositif suivant la revendication 3 ou 4, caractérisé en ce que le support est constitué par un tambour conducteur d'entraînement de la bande, ladite électrode filaire d'une part, les électrodes de création d'arc d'autre part, étant disposées face à des génératrices successives du tambour (11).

6. Dispositif suivant l'une quelconque des revendications 3 à 5, caractérisé en ce que les électrodes (17, 18) sont placées et construites de façon à ne créer qu'un seul canal de décharge en travers de la bande.

## Claims

1. Method for processing polymeric strip material by electrical discharge, wherein the strip is passed successively at a first location where electrical charges are deposited on one surface of the strip by corone discharge, then at a second location where the strip is subjected to an electrical AC discharge, characterized in that, at the second location, an arc sliding along said surface of the strip is caused by the electrical discharge between electrodes (17, 18) located on the same side of the strip and between which there is applied an AC high voltage, said sliding arc being directed transversely to the direction of movement of the strip for covering the strip throughout its width.

2. Method according to claim 1, characterized in that the charges are deposited by corona discharges between a conductive support bearing the strip and a wire electrode (14) parallel to the support and brought to a negative voltage with respect to the support (11).

3. Device for processing polymeric strip material (10) by electrical discharge, comprising a support (11) intended to receive a surface of the moving strip, a wire electrode (14) parallel to the support, having a curvature much higher than that of the support, means (15) for establishing, between the support and the electrode, a potential difference for creating a current by corona effect depositing charges on the other surface of the strip, and electrodes located on that side of the strip which is opposed to the support, at a location where the strip is passes and which is downstream of the wire electrode, characterized in that the electrodes are spaced in a direction transverse to the direction of movement of the strip and are subjected to an alternating voltage for creating an arc sliding along the surface of the strip which has received the charges, throughout the width of the strip.

4. Device according to claim 3, characterized in that n + 1 electrodes are distributed transversely to the strip to define n intervals for creating an arc, the electrodes being associated in pairs with an alternating voltage generator.

5. Device according to claim 3 or 4, characterized in that the support consists of a conductive strip driving drum, said wire electrode on one hand, the arc-creating electrodes on the other hand, being arranged opposite successive generatrix lines of the drum (11).

6. Device according to any one of claims 3-5, characterized in that the electrodes (17, 18) are located and constructed for creating a single discharge channel across the strip.

## Ansprüche

1. Verfahren zum Behandeln eines Bandes aus polymerem Material durch elektrische Entladung, bei dem das Band nacheinander an einer ersten Stelle, an der elektrische Ladungen durch Koronaentladung auf einer Oberfläche des Bandes aufgebracht werden, und dann an einer zweiten Stelle, an der das Band einer elektrischen Entladung mit Wechselstrom ausgesetzt wird, vorbeigeführt wird, dadurch gekennzeichnet, daß an der zweiten Stelle durch die elektrische Entladung ein entlang der erwähnten Oberfläche gleitender Lichtbogen quer zur Laufrichtung des Bandes erzeugt wird, um es auf seiner ganzen Breite zwischen Elektroden (17, 18) abzudecken, die auf derselben Seite des Bandes angeordnet sind und zwischen denen eine hohe Wechselspannung angelegt wird.

2. Verfahren nach Anspruch 1, dadurch gekennzeichnet, daß die Ladungen durch Koronaentladung zwischen einem das Band tragenden leitfähigen Träger und einer parallel zum Träger angeordneten und an einer gegenüber dem Träger (11) negativen Spannung liegenden Fadenelektrode (14) aufgebracht werden.

3. Vorrichtung zum Behandeln eines Bandes (10) aus polymerem Material durch elektrische Entladung, mit einem Träger (11) zur Aufnahme einer Oberfläche des umlaufenden Bandes, einer parallel zum Träger angeordneten Fadenelektrode (14) mit einer sehr viel stärkeren Krümmung als der des Trägers und Mitteln (15) zur Ausbildung einer Gleichpotentialdifferenz zwischen Träger und Elektrode zur Erzeugung eines Stromes durch Koronaentladung, der Ladungen auf der anderen Oberfläche des Bandes (10) aufbringt, und Elektroden, die an der Seite des Bandes gegenüber dem Träger in Bandlaufrichtung hinter der Fadenelektrode an einer Stelle angeordnet sind, an der das Band vorbeiläuft, dadurch gekennzeichnet, daß die Elektroden quer zur Laufrichtung des Bandes auseinanderliegend angeordnet sind und an einer Wechselspannung liegen, durch die ein entlang der mit den Ladungen versehenen Bandoberfläche gleitender Lichtbogen auf der gesamten Breite des Bandes erzeugt wird.

4. Vorrichtung nach Anspruch 3, dadurch gekennzeichnet, daß n + 1 Elektroden quer zum Band verteilt angeordnet sind, so daß n Lichtbogenerzeugungsabschnitte begrenzt werden, wobei die Elektroden paarweise mit einem Wechselspannungsgenerator verbunden sind.

5. Vorrichtung nach Anspruch 3 oder 4, dadurch gekennzeichnet, daß der Träger als leitende Bandantriebstrommel ausgebildet ist, daß die erwähnte Fadenelektrode einerseits und die Lichtbogenerzeugungselektroden andererseits gegenüber aufeinanderfolgenden Erzeugenden der Trommel (11) angeordnet sind.

6. Vorrichtung nach einem der Ansprüche 3 bis 5, dadurch gekennzeichnet, daß die Elektroden (17, 18) so angeordnet und ausgebildet sind, daß sie nur einen einzigen Entladungskanal quer über das Band erzeugen.

# Fig.1.

# Fig.2.

# Fig.3.